# FASCICULE DE BREVET EUROPEEN

(11) **EP 2 514 674 B1**
(45) Date de publication et mention de la délivrance du brevet: **20.01.2016**
(21) Numéro de dépôt: 12163970.2
(22) Date de dépôt: 12.04.2012
(51) Int. Cl.: B64G 1/22, B64G 1/54, B64G 1/66

(54) **Dispositif de protection d'un instrument optique d'un satellite**
Schutzvorrichtung für ein optisches Instrument eines Satelliten
Device for protecting an optical instrument of a satellite

(30) Priorité: 21.04.2011 FR 1101257
(43) Date de publication de la demande: 24.10.2012
(73) Titulaire: Thales, 92400 Courbevoie (FR)
(72) Inventeur: Baudasse, Yannick, 06130 Grasse (FR); Vezain, Stéphane, 06210 Mandelieu (FR)
(74) Mandataire: Lopez, Frédérique

(56) Documents cités:
- EP-A1- 2 151 704
- EP-A1- 2 272 761
- EP-A2- 2 287 075
- JP-A- 3 125 697

## Description

L'invention concerne le domaine des dispositifs de protection des instruments optiques des satellites.

Les instruments optiques des satellites comportant au moins un miroir nécessitent d'être protégés contre les entrées solaires directes sur les surfaces de ce miroir. Les protections évitent les perturbations optiques et permettent de réguler la température à proximité des plans focaux. Cette protection assure les performances optiques des instruments.

Ces instruments sont montés sur des satellites mis en orbite par des lanceurs. Du fait du faible volume alloué sous la coiffe du lanceur, il est impossible d'avoir un dispositif de protection fixe disposé en avant de l'instrument optique. Il est donc nécessaire de déployer cette protection en vol, avant la phase opérationnelle.

Les problèmes techniques rencontrés dans le cas de déploiement de grandes structures sont principalement :
En configuration stockée : volume restreint pour le stockage de la structure, maintien de l'intégrité de cette structure en configuration repliée, face aux agressions mécaniques et thermiques dues aux lancement de l'engin spatial, (notamment la non dégradation des éléments de protection thermique très fragile),

Pendant le déploiement : la maîtrise du déploiement en terme de cinématique, la régulation de la vitesse afin d'éviter les chocs en fin de déploiement.

En configuration déployée : assurer la stabilité et la rigidité en vol afin de garantir la pilotabilité de l'engin, et assurer un bon positionnement de la structure afin d'assurer la limitation des entrées solaires et la non obturation du champ de vue.

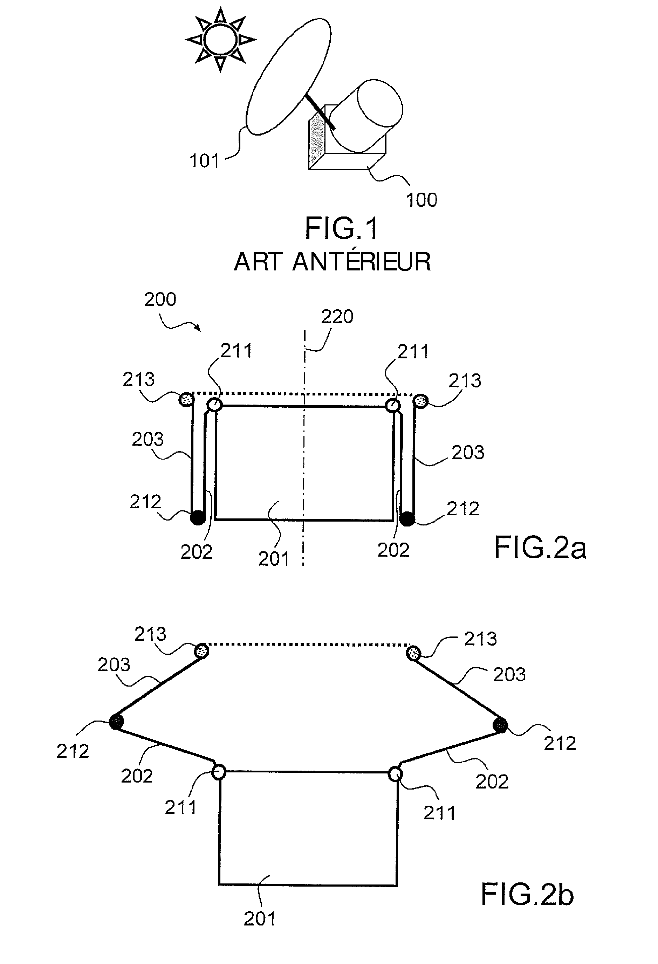

La figure 1 représente un dispositif de protection d'un instrument optique d'un satellite selon l'art connu. Ce dispositif comprend un écran solaire plan 101 positionné à une certaine distance du satellite 100. L'utilisation d'un écran plan implique, dans certaines missions, d'avoir un élément tournant (l'écran solaire) de grande dimension. Cette solution pose en outre des problèmes : de fiabilité, de perturbation AOCS (Attitude Orbit Control System), de perturbations au niveau des mesures optiques et de durée de vie dues aux éléments mécaniques mis en oeuvre.

De plus, afin d'éviter les entrées solaires durant certaines périodes, des pivotements complémentaires de l'écran solaire sont nécessaires, ce qui complexifie encore ce type de solution.

Ainsi, une protection proche du ou des faisceaux est une solution plus efficace car dénuée de tout mouvement pendant toute la phase opérationnelle.

Pour réaliser ce type de protection enveloppante, il est possible d'utiliser plusieurs technologies basées sur une structure porteuse déployable assurant le maintien et le positionnement d'un substrat souple.

La structure porteuse peut être gonflable et rigidifiable en vol mais la maîtrise du déploiement est complexe car difficilement modélisable par calcul et complexe à tester. De plus les procédés de rigidification sont irréversibles et ne permettent donc pas de tester au sol un modèle destiné au vol.

On connaît déjà des dispositifs de protections souples basés sur l'utilisation d'un fourreau de forme cylindrique souple, composés de feuilles de protection thermique. Cet élément est plié sur lui même pendant la phase stockée puis déployé et mis en tension. Cette solution présente plusieurs inconvénients. Tout d'abord lors du stockage, il est difficile d'éviter la dégradation des membranes constituant le matelas de protection thermique. Celles-ci sont très fragiles et sont sensibles aux agressions mécaniques. La membrane dégradée produit des particules qui, lors du déploiement, sont dispersées sur l'instrument et dégradent ces performances optiques. De plus, pour obtenir un stockage compact, il est nécessaire de plier les éléments flexibles, ce pliage est généralement irréversible et fragilisant pour la membrane. Enfin, la quantité d'éléments à déployer, de pièces en mouvement et de frottements entre composants fait que le déploiement est difficilement calculable et peu reproductible. Il en résulte une sur-estimation de l'énergie nécessaire à la mise en tension de l'élément flexible, afin de lui assurer un bon positionnement final, ce qui peut engendrer des dégradations sur certains composants et sur la membrane.

En outre, on connaît le document EP 2 272 761 A1, qui est considéré comme l'art antérieur le plus proche et décrit les caractéristiques du préambule de la revendication 1.

L'invention vise à pallier les problèmes cités précédemment en proposant un dispositif de protection d'un instrument optique d'un satellite suffisamment compact en positon stockée, pour permettre l'aménagement du satellite sous la coiffe d'un lanceur, permettant un déploiement maîtrisé et régulé, qui, une fois déployé offre une protection efficace contre des entrées solaires parasites et disposant d'une rigidité suffisante pour permettre le contrôle du satellite.

A cet effet, l'invention a pour objet un dispositif de protection d'un instrument optique d'un satellite selon les caractéristiques de la revendication 1.

Avantageusement, une face comporte au moins un premier étage, un étage comportant : un premier panneau et un second panneau, le premier panneau du premier étage étant relié au corps du satellite par une première articulation, le second panneau étant relié au premier panneau par une seconde articulation, le premier étage étant appelé dernier étage si le dispositif comporte un unique étage.

Avantageusement, le dispositif de protection comporte au moins un étage supplémentaire, le premier panneau de l'étage supplémentaire étant relié au deuxième panneau de l'étage adjacent, l'étage étant le plus éloigné de la caisse étant appelé dernier étage.

Avantageusement, le dispositif de protection comporte en outre moyens de maintien des panneaux en position repliée.

Avantageusement, l'instrument optique comporte un miroir primaire, le dispositif comprenant, en outre, un élément optique secondaire fixé sur les seconds panneaux du dernier étage de façon à réfléchir la lumière vers le miroir primaire.

Avantageusement, le dispositif de protection comporte en outre des générateurs solaires fixés au niveau d'une rangée d'articulations de la structure déployable.

Avantageusement, les panneaux sont pleins.

Avantageusement, les panneaux comportent un cadre rigide sur lequel est fixée une membrane tendue.

Avantageusement, les panneaux de protection comprennent des éléments de contrôle actif et passif positionnés directement sur leur surface, le dispositif assurant une fonction de régulateur thermique.

Avantageusement, le dispositif de protection comporte des radiateurs déployables fixés au niveau d'une rangée d'articulations.

Avantageusement, le dispositif de protection comporte des moyens de verrouillage périphérique assurant le maintien des panneaux en fin de déploiement.

L'invention utilise des éléments rigides de manière à maîtriser totalement tous les paramètres de déploiement. Ces éléments rigides, peuvent êtres composés de panneaux homogènes de type composite en nid d'abeilles, ou par des cadre rigides sur lesquels sont tendues des membranes souples. En position repliée le dispositif selon l'invention est suffisamment compact pour être logé dans la coiffe d'un lanceur.

Le déploiement du dispositif peut être régulé, synchronisé ou séquencé et donc maîtrisé. La cinématique de déploiement est modélisable et une corrélation par essais est réalisable. Le déploiement est réalisable au sol et reproductible en vol.

Les entrées solaires sont « bloquées » par des chicanes composée par des éléments de chaque panneaux se recouvrant mutuellement. Il est également possible de réaliser l'étanchéité à la lumière par des joints de bordure constitués du même substrat thermique que celui recouvrant la structure déployable dont les jeux sont parfaitement maîtrisés et reproductibles.

Il est également possible en outre d'intégrer des cellules solaires, ou tout autre élément (actif ou passif) de régulation thermique, sur certains panneaux.

Il est également possible en outre d'intégrer des éléments déployables sur certains panneaux tels que des générateurs solaires ou des radiateurs.

L'invention sera mieux comprise et d'autres avantages apparaîtront à la lecture de la description détaillée faite à titre d'exemple non limitatif et à l'aide des figures parmi lesquelles :
La figure 1, déjà présentée, représente un dispositif de protection selon l'art connu.
Les figures 2a à 2d représente un premier exemple de mise en oeuvre du dispositif de protection selon l'invention.
La figure 3 représente le positionnement de moyens de maintien des panneaux en position repliée et déployée dans le premier exemple de mise en oeuvre du dispositif de protection selon l'invention.
La figure 4 représente un exemple d'articulation pour relier les panneaux entre eux.
La figure 5 représente une première variante de réalisation du dispositif de protection selon l'invention comportant deux étages de panneaux.
La figure 6 représente une deuxième variante de réalisation du dispositif de protection selon l'invention comportant une optique secondaire.
La figure 7 représente une troisième variante de réalisation du dispositif de protection selon l'invention comportant des générateurs solaires.
La figure 8 représente une quatrième variante de réalisation du dispositif de protection selon l'invention comportant des radiateurs déployables.
Les figures 9a à 9c représentent une cinquième variante de réalisation du dispositif de protection selon l'invention comportant un dispositif de verrouillage.

La solution de l'invention utilise des éléments rigides dont les caractéristiques techniques sont parfaitement connues, maîtrisées et reproductibles. Cette solution permet de stocker d'une manière compacte et rigide un dispositif de forme polygonale, déployable, pouvant atteindre plusieurs dizaines de mètres de longueur.

Le dispositif comprend des panneaux articulés formant en configuration déployée, un tube polygonal. Pour obtenir cette forme, chaque face du polygone est composé d'un sous ensemble de panneaux liées entres eux par des articulations auto-motorisées. Chaque sous ensemble étant liés, à sa base, au satellite par une articulation d'emplanture et aux autres sous ensembles à son extrémité opposée, ainsi que éventuellement, par des systèmes de verrouillages périphériques. Ces liaisons aux extrémités et en périphérie permettent d'obtenir une structure fermée et donc assure une rigidité globale de l'ensemble.

Potentiellement, du fait que cette structure est fermée par un ensemble d'articulations motorisées, il est possible de contrôler la vitesse de déploiement de l'ensemble de la structures par un seul système de régulation positionné à l'emplanture du baffle. La synchronisation des mouvement est obtenue par un jeu de câbles et de poulies liant les différentes articulations au régulateur.

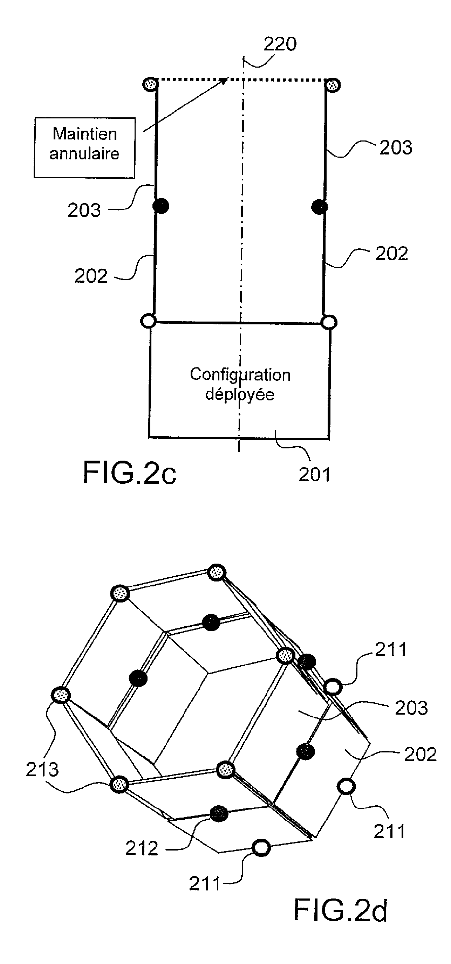

La figure 2 représente un premier exemple de mise en oeuvre du dispositif de protection selon l'invention. Dans cet exemple, donné à titre non limitatif, le dispositif déployé est un tube de section hexagonale. Le nombre de faces du tube peut être supérieur ou inférieur.

Le dispositif de l'exemple comprend six faces. Chacune des faces comprend un premier panneau 202 relié au corps 201 du satellite par le biais d'une première articulation 211 et un second panneau 203 relié au premier panneau 202 par le biais d'une seconde articulation 212.

Des articulations 213 permettent de maintenir solidaires des panneaux appartenant à des faces adjacentes en position déployée.

Le tube présente un axe longitudinal 220.

La figure 2a présente une vue en coupe du satellite avec le dispositif de protection en position repliée. Les panneaux 202, 203 de chaque face sont maintenus contre le corps 201 du satellite.

La figure 2b présente une vue en coupe du satellite avec le dispositif de protection en position intermédiaire. Les premiers panneaux 202 pivotent par rapport au corps du satellite 201 autour des premières articulations 211. Les seconds panneaux 203 pivotent par rapport aux premiers panneaux 202 autour des secondes articulations 212. Les rotations se font selon des axes orthogonaux à l'axe longitudinal 220.

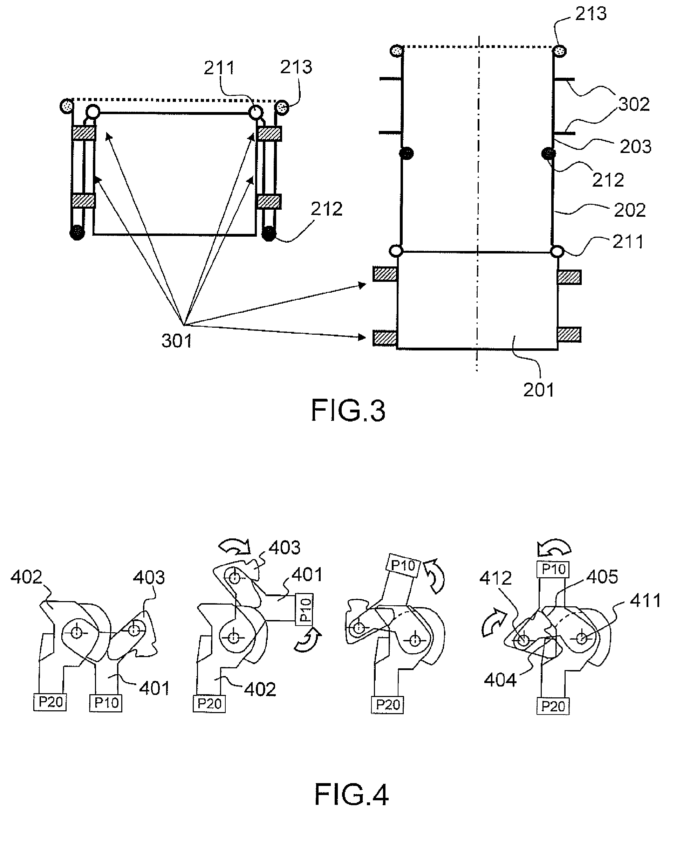

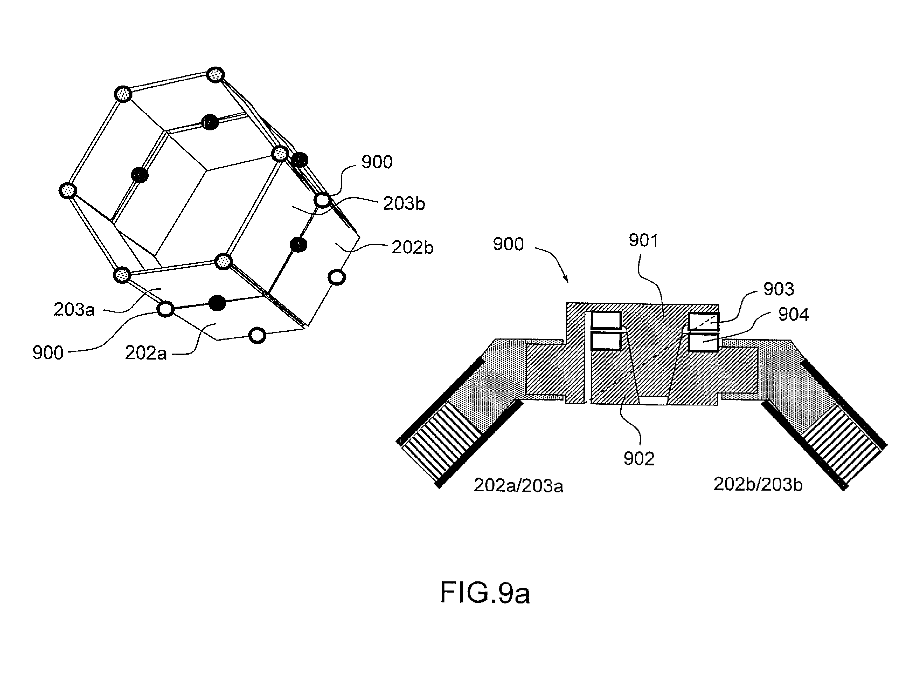

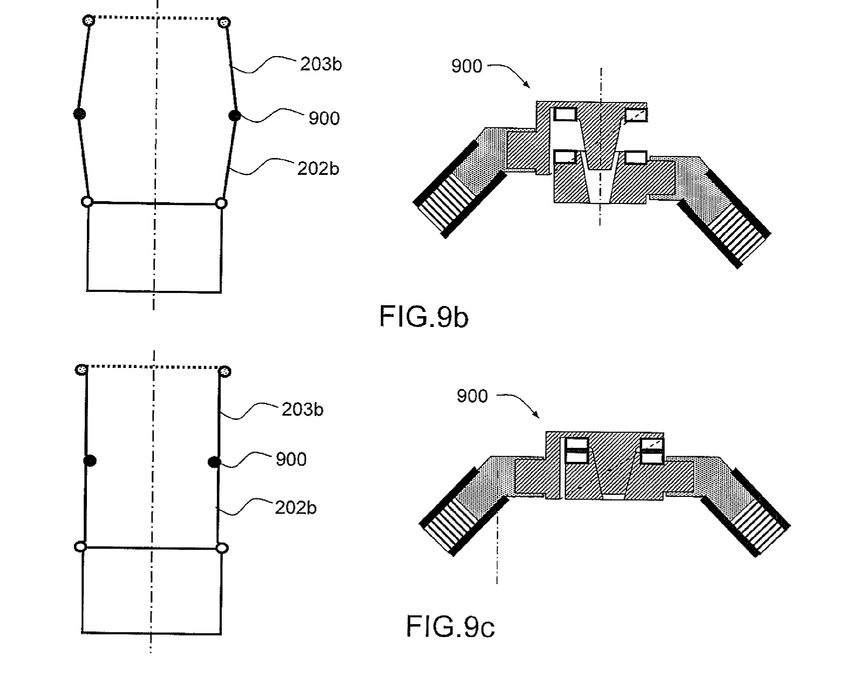

La figure 2c présente une vue en coupe du satellite avec le dispositif de protection en position déployée. Les panneaux 202, 203 forment un cylindre de section hexagonale dont l'axe longitudinal 220 coïncide sensiblement avec l'axe focale de l'instrument optique. Les articulations ont la propriété de pouvoir se verrouiller en configuration déployée comme cela est expliqué plus loin dans la description (figure 4). Les panneaux étant tous liés les uns aux autres, ces multiples verrouillages assurent une rigidité d'ensemble importante. Des systèmes de verrouillages supplémentaires, dont un exemple est représenté en figure 9. peuvent apporter une rigidité encore supérieure en liant les sous ensembles panneaux entres eux en zone centrale.

La figure 2d est une vue en perspective du dispositif de protection en position déployée. On y distingue les articulations 213 permettant de maintenir solidaires les panneaux appartenant à des faces adjacentes, ainsi que les systèmes de verrouillages permettant de lier les sous ensembles panneaux.

Les premières articulations 211 sont placées au milieu de l'arête adjacente au corps du satellite 201. Les secondes articulations 212 sont placées au milieu ou dans les coins de l'arête adjacente entre les premiers panneaux 202 et les seconds panneaux 203.

Selon une caractéristique de l'invention, le dispositif comprend des moyens de maintien des panneaux en position repliée. La figure 3 représente le positionnement de moyens de maintien des panneaux en position repliée dans le premier exemple de mise en oeuvre du dispositif de protection selon l'invention. Dans cet exemple de mise en oeuvre, les moyens de maintien comprennent des pieds de gerbage 301 et des tirants de gerbage 302.

Les pieds de gerbage 301 sont des tripodes ou des ferrures monobloc fixés sur le corps 201 du satellite. Les tirants de gerbage 302 sont positionnés sur le deuxième panneau 203. Dans l'exemple, chaque sous ensemble de panneaux est maintenu plaquée contre les pieds de gerbage par des tirants traversant maintenus en leur extrémité respective par des écrous de mis en tension.

En position repliée, les tirants 302 sont retenus par des écrous de libération positionnés sur les pieds de gerbage 301. Les panneaux sont ainsi maintenus stockés contre le corps 201 du satellite. Les tirants d'une face traversent le premier panneau 202 de cette face.

Pour passer en position déployée, les pieds relâchent les tirants qui sont alors projetés en face externe des derniers panneaux 203 du dispositif. En position déployée, les tirants sont positionnés sur la face externe du deuxième panneau 203 pour ne pas être dans le champ de vision de l'instrument optique.

La figure 4 représente un exemple d'articulation pour relier les panneaux entre eux.

L'articulation 212 par exemple, comporte une première pièce 401 avec une première extrémité P10 liée, par exemple à un premier panneau 202 et seconde pièce 402 avec une seconde extrémité P20 liée à un second panneau 203. La première pièce 401 est reliée à la seconde pièce 402 et est mobile en rotation autour d'un premier axe 411 par rapport à la seconde pièce 402. La seconde pièce 402 est également motorisée en rotation autour d'un premier axe 411 et par rapport à la première pièce 401, par un ressort spirale non représenté. L'articulation comporte une troisième pièce 403 relié à la première pièce 401 et motorisée en rotation par un ressort non représenté par rapport à la première pièce 401 selon un second axe 412. La troisième pièce 403 comporte une butée anti-retour 405 empêchant la rotation de la première pièce 401 en sens inverse une fois que la première pièce 401 est arrivée en contact sur la butée 404 de la seconde pièce 402.

Les articulations assurent des fonctions de motorisation, de guidage et de verrouillage des panneaux.

Pour une articulation utilisée pour relier un premier panneau au corps du satellite, la première extrémité P10 est reliée au premier panneau 202 et la seconde extrémité P20 est reliée au corps du satellite 201.

En position repliée, les panneaux sont parallèles. En position déployée, le deuxième panneau pivote autour du premier axe de rotation 411, jusqu'à être sensiblement dans le prolongement du premier panneau 202.

Selon un mode de réalisation de l'invention, le dispositif de protection comporte un étage supplémentaire. Le premier panneau de l'étage supplémentaire est alors relié au deuxième panneau de l'étage adjacent. L'étage étant le plus éloigné du corps du satellite 201 est appelé dernier étage. Il est ainsi possible de d'assembler plusieurs étages. Ainsi on peut réaliser un empilement de plusieurs étages similaires tout en préservant une bonne rigidité d'ensemble.

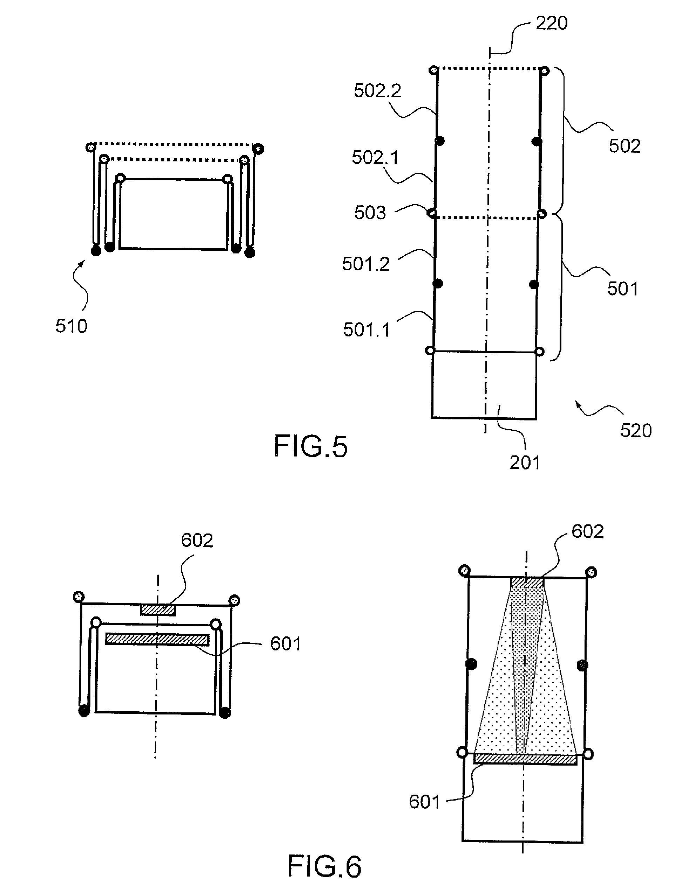

La figure 5 représente une première variante de réalisation du dispositif de protection selon l'invention comportant deux étages 501, 502 de panneaux. Les deux étages 501, 502 ont une structure similaire : deux panneaux 501.1,501.2,502.1,502.2 reliés par une articulation 503. Les deux étages sont reliés par une articulation.

En position repliée 510, l'ensemble des panneaux est maintenu contre la caisse du satellite de la même manière que précédemment par un système de tirant de gerbage traversant qui se positionneront en déployé, sur les faces externes des derniers panneaux 502.2 du dernier étage 502 . Les étages se déploient successivement de façon similaire. En position déployée 520, les deux étages 501, 502 forment un cylindre.

Dans le cas d'un unique étage dont les panneaux ont sensiblement la même hauteur que le corps du satellite, on obtient un dispositif de protection dont la hauteur est équivalente à deux fois celle du corps du satellite.

Dans le cas de deux étages dont les panneaux ont sensiblement la même hauteur que le corps du satellite, on obtient un dispositif de protection dont la hauteur est équivalente à quatre fois celle du corps du satellite.

Selon une variante de réalisation de l'invention, l'instrument optique comporte un miroir primaire. Le dispositif de protection comprend, en outre, un élément optique, par exemple un miroir secondaire fixé sur les seconds panneaux du dernier étage de façon à réfléchir la lumière vers le miroir primaire, en position déployée. Il est possible également d'avoir un miroir secondaire monté sur un système de pointage fin. Permettant de corriger les défauts de la structure déployable porteuse.

Le dispositif de protection a donc aussi pour avantage de pouvoir embarquer, en sa partie supérieure un élément optique, qui de ce fait, devient déployable comme l'ensemble de la structure.

La figure 6 représente une deuxième variante de réalisation du dispositif de protection selon l'invention comportant une optique secondaire.

En position repliée, le miroir secondaire est maintenu en regard du miroir primaire de l'instrument optique.

En position déployée, le miroir secondaire est placé à distance du miroir primaire.

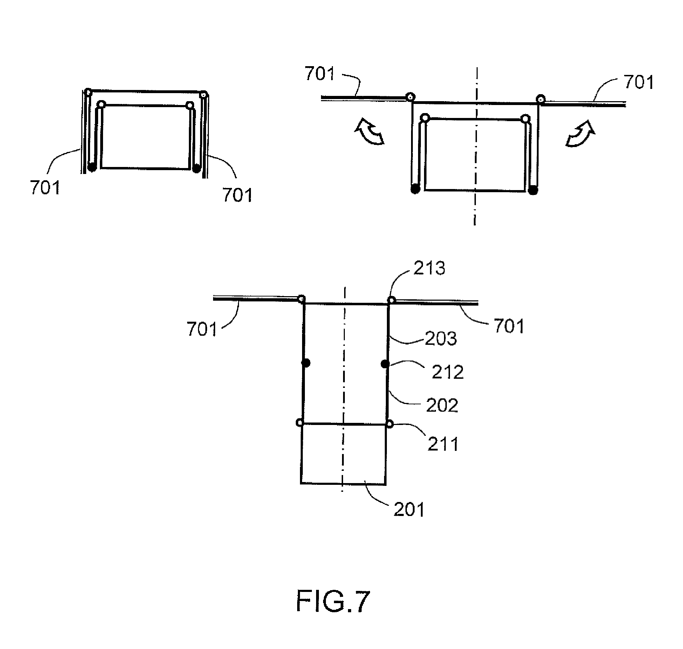

La figure 7 représente une troisième variante de réalisation du dispositif de protection selon l'invention comportant des générateurs solaires. Selon une autre variante de réalisation de l'invention, l'instrument optique comporte en outre des générateurs solaires fixés au niveau d'une rangée d'articulations de la structure déployable et dans le cas représenté, à l'extrémité des seconds panneaux du dernier étage.

En position repliée, les générateurs solaires ou panneaux solaires sont maintenus contre les panneaux secondaires auxquels ils sont reliés par une articulation.

Les panneaux solaires sont déployables indépendamment du dispositif de protection. Chacun des panneaux solaires est déployé par rotation autour de l'articulation le reliant au second panneau. Ils peuvent fonctionner dès le début de la mission, le dispositif de protection pouvant être ouvert dans un second temps.

En position déployée, les générateurs solaires sont préférentiellement perpendiculaires à l'axe longitudinal du tube, mais peuvent être orienté d'un angle quelconque en fonction de l'orientation du soleil par rapport au satellite.

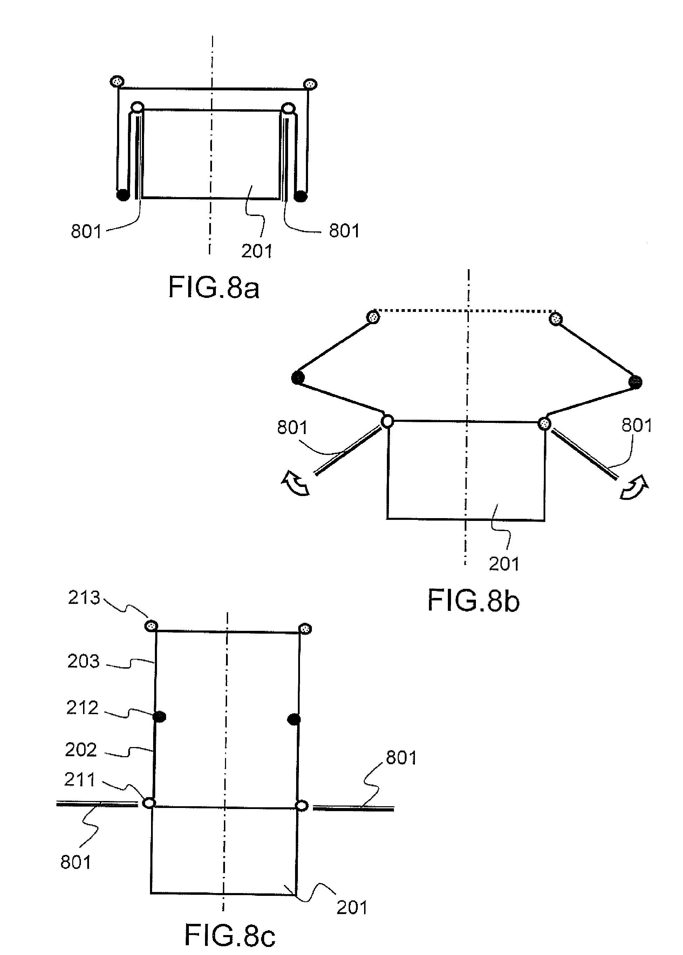

La figure 8 représente une quatrième variante de réalisation du dispositif de protection selon l'invention comportant des radiateurs déployables. Selon une autre variante de réalisation de l'invention, la structure déployable comporte en outre des radiateurs déployables 801 fixés au niveau d'une des lignes d'articulations de la structure déployable et préférentiellement, soit à proximité des optiques primaires, au niveau des lignes d'articulation d'emplanture 211, soit à proximité des optiques secondaires, au niveau des lignes d'articulation 213 des panneaux du dernier étage.

En position repliée, les radiateurs déployables 801 sont maintenus contre les panneaux secondaires auxquels ils sont reliés par une articulation.

Chacun des radiateurs déployables 801 est déployé par rotation autour de l'articulation le reliant au différents panneaux. Ils peuvent fonctionner dès le début de la mission, dans le cas ou il se situent sur les derniers panneaux, le dispositif de protection pouvant être ouvert dans un second temps.

En position déployée, les radiateurs déployables 801 sont préférentiellement perpendiculaires à l'axe longitudinal du tube , mais peuvent être orienté d'un angle quelconque en fonction de l'orientation de l'espace par rapport au satellite

Avantageusement, le dispositif de protection comprend en outre des moyens de verrouillage périphérique assurant une bonne rigidité de l'ensemble par le maintien des panneaux en fin de déploiement.

Les figure 9a, 9b, 9c représentent un exemple de réalisation d'un dispositif de verrouillage basé sur un concept d'aimant permanent. A titre d'exemple, la figure 9a représente la position périphérique des systèmes de verrouillage des panneaux en fin de déploiement. La figure 9b représente les panneaux en configuration « fin de déploiement et la figure 9c représente les panneaux en configuration déployée et verrouillée. Le sous ensemble panneau 202a, 203a est équipé d'une ferrure à bout conique mâle 901 et sous ensemble panneau 202b, 203b est équipé d'une ferrure à bout conique femelle 902. Chacune des deux ferrures est elle-même équipée d'un aimant permanent 903, 904, respectivement solidaire de chaque ferrure. En fin de déploiement, les systèmes d'articulation permettent aux extrémités des panneaux 202a, 203a et 202b, 203b de se positionner en vis-à-vis de manière à ce que la ferrure à bout conique mâle 901 vienne s'emboîter dans la ferrure à bout conique femelle 902. Sous l'effet des aimants 903 et 904 et de l'attraction magnétique en résultant, les deux ferrures viennent en contact et restent ensuite maintenues l'une contre l'autre.

Selon une variante de l'invention, les panneaux peuvent être constitués d'un panneaux composite de type nid d'abeilles ou d'un élément semi rigide de type tôle composite renforcée.

Selon une variante de l'invention, les panneaux comportent un cadre rigide sur lequel est fixée une membrane tendue.

Afin de garantir de bonnes performances des instruments, le dispositif de protection peut également assurer la fonction de régulateur thermique, grâce à l'adjonction d'éléments de contrôle actif et passif positionnés directement sur la surface des panneaux.

Les composants permettant le contrôle thermique (actif et passif) sont liés à une surface stable et maîtrisée et sont donc protégées des agressions mécaniques en position repliée et durant le déploiement.

Les différents modes de réalisation peuvent être combinés entre eux. Il est possible d'avoir un dispositif comportant plusieurs étages avec des générateurs solaires, une optique secondaire, ainsi qu'un système de régulation thermique.

## Revendications

1. Dispositif de protection (200) d'un instrument optique d'un satellite comprenant un corps (201) sur lequel est monté l'instrument optique, ledit dispositif de protection comportant une position repliée et une position déployée, et comprenant une pluralité de panneaux rigides (202, 203), les dits panneaux étant maintenus contre le corps du satellite en position repliée, et formant un tube de section polygonale en position déployée, disposé de façon à protéger l'instrument optique, l'axe longitudinal (220) du tube étant sensiblement parallèle avec l'axe focal de l'instrument optique, le dit dispositif étant **caractérisé en ce que** chaque face du polygone est composée d'un sous-ensemble de la pluralité de panneaux rigides, les panneaux rigides étant liés entres eux par des articulations auto-motorisées (211, 212, 213).

2. Dispositif de protection selon la revendication 1, dans lequel une face du polygone comporte au moins un premier étage, un étage comportant : un premier panneau (202) et un second panneau (203), le premier panneau (202) du premier étage étant relié au corps (201) du satellite par une première articulation (211), le second panneau (203) étant relié au premier panneau (202) par une seconde articulation (212), le premier étage étant appelé dernier étage si le dispositif comporte un unique étage.

3. Dispositif de protection selon la revendication 2, dans lequel la première articulation (211) est placée au milieu de l'arête adjacente au corps du satellite (201) et la seconde articulation (212) est placée au milieu ou dans les coins de l'arête adjacente entre le premier panneau (202) et le second panneau (203).

4. Dispositif de protection selon la revendication 3, dans lequel la seconde articulation (212) comporte une première pièce (401, P10) liée au premier panneau (202) et une seconde pièce (402, P20) liée au second panneau (203).

5. Dispositif de protection selon la revendication 4, dans lequel la première pièce est reliée à la seconde pièce et est mobile en rotation autour d'un premier axe (411) par rapport à la seconde pièce, et comportant une troisième pièce (403) reliée à la première pièce et motorisée en rotation par rapport à la première pièce selon un second axe (412).

6. Dispositif de protection selon la revendication 5, dans lequel la troisième pièce comporte une butée anti-retour (405) empêchant la rotation de la première pièce en sens inverse une fois la première pièce arrivée en contact sur la butée anti-retour de la seconde pièce.

7. Dispositif de protection selon l'une des revendications précédentes, comprenant en outre moyens de maintien (301, 302) des panneaux en position repliée.

8. Dispositif de protection selon l'une des revendications précédentes, dans lequel l'instrument optique comporte un miroir primaire (601), le dispositif comprenant, en outre, un élément optique secondaire (602) fixé sur les seconds panneaux (203) du dernier étage de façon à réfléchir la lumière vers le miroir primaire (601).

9. Dispositif de protection selon l'une des revendications précédentes, comportant en outre des générateurs solaires (701) fixés au niveau d'une rangée d'articulations de la structure déployable.

10. Dispositif de protection selon l'une des revendications 1 à 9, dans lequel les panneaux comportent un cadre rigide sur lequel est fixée une membrane tendue.

11. Dispositif de protection selon l'une des revendications précédentes, dans lequel les panneaux comprennent des éléments de contrôle actif et passif positionnés directement sur leur surface, le dispositif assurant une fonction de régulateur thermique.

12. Dispositif de protection selon l'une des revendications précédentes, comportant des radiateurs déployables (801) fixés au niveau d'une rangée d'articulations.

13. Dispositif de protection selon la revendication précédente comportant en outre des moyens de verrouillage périphérique (900) assurant le maintien des panneaux en fin de déploiement.

## Patentansprüche

1. Vorrichtung (200) zum Schützen eines optischen Instruments eines Satelliten, umfassend einen Körper (201), an dem das optische Instrument montiert ist, wobei die Schutzvorrichtung eine gefaltete Position und eine entfaltete Position aufweist, und umfassend mehrere starre Platten (202, 203), wobei die Platten in der gefalteten Position gegen den Körper des Satelliten gehalten werden und in der entfalteten Position eine Röhre mit polygonalem Querschnitt bilden, so angeordnet, dass das optische Instrument geschützt wird, wobei die Längsachse (220) der Röhre im Wesentlichen parallel zur Brennachse des optischen Instruments ist, wobei die Vorrichtung **dadurch gekennzeichnet ist, dass** jede Fläche des Polygons aus einem Teilsatz der mehreren stamen Platten gebildet ist, wobei die starren Platten durch selbstangetriebene Gelenke (211, 212, 213) miteinander verbunden sind.

2. Schutzvorrichtung nach Anspruch 1, bei der eine Fläche des Polygons wenigstens eine erste Ebene umfasst, wobei eine Ebene Folgendes umfasst: eine erste Platte (202) und eine zweite Platte (203), wobei die erste Platte (202) der ersten Ebene mit dem Körper (201) des Satelliten durch ein erstes Gelenk (211) verbunden ist, wobei die zweite Platte (203) mit der ersten Platte (202) durch ein zweites Gelenk (212) verbunden ist, wobei die erste Ebene letzte Ebene genannt wird, wenn die Vorrichtung eine einzige Ebene umfasst.

3. Schutzvorrichtung nach Anspruch 2, bei der sich das erste Gelenk (211) in der Mitte der dem Körper des Satelliten (201) benachbarten Kante befindet und das zweite Gelenk (212) sich in der Mitte oder an den Ecken der benachbarten Kante zwischen der ersten Platte (202) und der zweiten Platte (203) befindet.

4. Schutzvorrichtung nach Anspruch 3, bei der das zweite Gelenk (212) ein mit der ersten Platte (202) verbundenes erstes Teil (401, P10) und ein mit der zweiten Platte (203) verbundenes zweites Teil (402, P20) umfasst.

5. Schutzvorrichtung nach Anspruch 4, bei der das erste Teil mit dem zweiten Teil verbunden und um eine erste Achse (411) in Bezug auf das zweite Teil drehbeweglich ist, und die ein drittes Teil (403) umfasst, das mit dem ersten Teil verbunden und in Bezug auf das erste Teil gemäß einer zweiten Achse (412) in Drehung versetzt wird.

6. Schutzvorrichtung nach Anspruch 5, bei der das dritte Teil einen Rücklaufschutzanschlag (405) umfasst, der eine Rotation des ersten Teils in umgekehrter Richtung verhindert, wenn das erste Teil mit dem Rücklaufschutzanschlag des zweiten Teils in Kontakt angekommen ist.

7. Schutzvorrichtung nach einem der vorherigen Ansprüche, die darüber hinaus Mittel (301, 302) zum Halten der Platten in einer gefalteten Position umfasst.

8. Schutzvorrichtung nach einem der vorherigen Ansprüche, bei der das optische Element einen primären Spiegel (601) umfasst, wobei die Vorrichtung darüber hinaus ein zweites optisches Element (602) umfasst, das an den zweiten Platten (203) der letzten Ebene so fixiert ist, dass das Licht zum ersten Spiegel (601) hin reflektiert wird.

9. Schutzvorrichtung nach einem der vorherigen Ansprüche, die darüber hinaus Solargeneratoren (701) umfasst, die an einer Reihe von Gelenken der entfaltbaren Struktur befestigt sind.

10. Schutzvorrichtung nach einem der Ansprüche 1 bis 9, wobei die Platten einen starren Rahmen umfassen, an dem eine gespannte Membran befestigt ist.

11. Schutzvorrichtung nach einem der vorherigen Ansprüche, bei der die Platten aktive und passive Steuerelemente umfassen, die direkt an ihrer Fläche positioniert sind, wobei die Vorrichtung eine Wärmeregelfunktion gewährleistet.

12. Schutzvorrichtung nach einem der vorherigen Ansprüche, die entfaltbare Strahler (801) umfasst, die an einer Reihe von Gelenken befestigt sind.

13. Schutzvorrichtung nach dem vorherigen Anspruch, die darüber hinaus Mittel (900) zum peripheren Verriegeln umfasst, damit die Platten am Ende des Entfaltens festgehalten werden.

## Claims

1. Protection device (200) for an optical instrument of a satellite comprising a body (201) on which the optical instrument is mounted, the protection device comprising a folded position and a deployed position, and comprising a plurality of rigid panels (202, 203), the panels being held against the body of the satellite in the folded position and forming a tube having a polygonal cross-section in the deployed position, arranged to protect the optical instrument, the longitudinal axis (220) of the tube being substantially parallel with the focal axis of the optical instrument, the device being **characterised in that** each face of the polygon is composed of a sub-assembly of the plurality of rigid panels, the rigid panels being connected to each other by means of self-propelled articulations (211,212,213).

2. Protection device according to claim 1, wherein one face of the polygon comprises at least a first stage, a stage comprising: a first panel (202) and a second panel (203), the first panel (202) of the first stage being connected to the body (201) of the satellite by means of a first articulation (211), the second panel (203) being connected to the first panel (202) by means of a second articulation (212), the first stage being called the final stage if the device comprises a single stage.

3. Protection device according to claim 2, wherein the first articulation (211) is placed at the centre of the edge adjacent to the body of the satellite (201) and the second articulation (212) is placed at the centre or in the corners of the adjacent edge between the first panel (202) and the second panel (203).

4. Protection device according to claim 3, wherein the second articulation (212) comprises a first component (401, P10) which is connected to the first panel (202) and a second component (402, P20) which is connected to the second panel (203).

5. Protection device according to claim 4, wherein the first component is connected to the second component and can be moved in rotation about a first axis (411) relative to the second component, and comprising a third component (403) which is connected to the first component and motorized in terms of rotation relative to the first component along a second axis (412).

6. Protection device according to claim 5, wherein the third component comprises a non-return stop (405) which prevents the rotation of the first component in the opposite direction once the first component has moved into contact with the non-return stop of the second component.

7. Protection device according to any one of the preceding claims, further comprising means (301, 302) for retaining the panels in the folded position.

8. Protection device according to any one of the preceding claims, wherein the optical instrument comprises a primary mirror (601), the device further comprising a secondary optical element (602) which is fixed to the second panels (203) of the final stage so as to reflect the light towards the primary mirror (601).

9. Protection device according to any one of the preceding claims further composing solar generators (701) which are fixed at a row of articulations of the deployable structure.

10. Protection device according to any one of claims 1 to 9, wherein the panels comprise a rigid frame to which a tensioned membrane is fixed.

11. Protection device according to any one of the preceding claims, wherein the panels comprise active and passive control elements which are positioned directly on their surface, the device acting as a thermal controller.

12. Protection device according to any one of the preceding claims, composing deployable radiators (801) which are fixed at a row of articulations.

13. Protection device according to the preceding claim, further comprising peripheral locking means (900) which ensure the retention of the panels at the end of deployment.
